# EUROPÄISCHE PATENTSCHRIFT

(11) **EP 1 504 538 B1**
(45) Veröffentlichungstag und Bekanntmachung des Hinweises auf die Patenterteilung: **14.12.2005**
(21) Anmeldenummer: 03729860.1
(22) Anmeldetag: 05.05.2003
(51) Int. Cl.: H04B 1/44

(54) **Sende- und Empfangsanordnung mit kanalorientierter Verbindung**
Transmitting and receiving arrangement with a channel oriented link
Dispositif d'émission-réception à liaison orientée canal

(30) Priorität: 14.05.2002 DE 10221424
(43) Veröffentlichungstag der Anmeldung: 09.02.2005
(73) Patentinhaber: Infineon Technologies AG, 81669 München (DE)
(72) Erfinder: GERSEMSKY, Frank, 44789 Bochum (DE); KRANZ, Christian, 40885 Ratingen Lintorf (DE); POTT, Rüdiger, 46535 Dinslaken (DE); SCHMANDT, Bernd, 42329 Wuppertal (DE); WAGNER, Elmar, 47269 Duisburg (DE)
(74) Vertreter: Lange, Thomas
(86) Internationale Anmeldenummer: PCT/DE2003/001427
(87) Internationale Veröffentlichungsnummer: WO 2003/096563

(56) Entgegenhaltungen:
- DE-C- 19 918 059
- US-A- 6 072 994
- CHUN R K: "ARINC 429 DIGITAL DATA COMMUNICATIONS FOR COMMERCIAL AIRCRAFT" JOURNAL OF GUIDANCE AND CONTROL AND DYNAMICS, AIAA. NEW YORK, US, Bd. 6, Nr. 2, März 1983 (1983-03), Seiten 120-123, XP009010248 ISSN: 0731-5090

## Beschreibung

Die vorliegende Erfindung betrifft eine Sende- und Empfangsanordnung, sowie ein Verfahren zur Übertragung von Kontroll- und Nutzdaten in einer solchen nach dem Oberbegriff des Patentanspruchs 1 bzw. des Patentanspruchs 4.

In drahtlosen Kommunikationssystemen wird üblicherweise zwischen Feststationen und mobilen Stationen unterschieden, wobei mehrere mobile Stationen mit einer Feststation kommunizieren können. Auf dem Gebiet der Mobilfunktechnik haben sich in den letzten Jahrzehnten eine Reihe standardisierter Modulationsverfahren, wie beispielsweise DECT, WDCT, Bluetooth, GSM, oder 3GPP etabliert. In den Sendeeinrichtungen der Feststationen und der mobilen Stationen werden Sendedaten, wie Sprach-, Text- oder Bilddaten mittels Modulatoren auf eine Trägerfrequenz moduliert. Diese Modulatoren sind in der Regel aus verschiedenen Funktionseinheiten aufgebaut. Üblicherweise werden sie in ein Basisbandteil und in ein Hochfrequenzteil aufgeteilt.

Innerhalb des Basisbandteils wird mittels digitaler Signalverarbeitung aus den zu übertragenden Daten ein Basisbandsignal erzeugt. Dieses relativ niederfrequente Basisbandsignal wird innerhalb des Hochfrequenzteils in eine hochfrequente Lage verschoben. Diese Verschiebung geschieht beispielsweise in einer homodynen oder heterodynen Sendearchitektur. Die zu übertragenden Daten werden anschließend nach einer Leistungsverstärkung mittels einer Antenne über einen Funkkanal gesendet. Der Empfang der Daten erfolgt entsprechend zunächst über das Hochfrequenzteil, in dem aus dem Hochfrequenzsignal wieder das ursprüngliche Basisbandsignal erzeugt wird, und anschließend über das Basisbandteil zur Gewinnung der zu übertragenden Daten.

Aufgrund der unterschiedlichen physikalischen Anforderung werden Basisband- und Hochfrequenzteile meist in voneinander getrennten integrierten Schaltkeisen (Halbleiterchips) hergestellt. Diese Unterteilung wird insbesondere auch durch unterschiedliche Leistungs- und Frequenzanforderung notwendig. Bereits bekannte Beispiel für derartige Halbleiterchips sind der DECT Basisbandchip PMB 6720 und der DECT Hochfrequenzchip PMB 6610 der Infineon Technologies AG. Basisbandchip und Hochfrequenzchip sind zur Übertragung des Basisbandsignals und einer Reihe von Steuersignalen über eine Vielzahl von Leitungen miteinander verbunden. Dadurch ist eine große Anzahl an Anschlußstiften an den beiden Halbleiterchips erforderlich. Eine geringe Anzahl von Anschlußstiften erlaubt dagegen ein vereinfachtes Schaltungslayout. Sowohl die Herstellung der Halbleiterchips als auch einer Schaltungsplatte, in der beide Halbleiterchips miteinander verbunden sind, kann dadurch einfacher und kostengünstiger gestaltet werden. Eine geringe Anzahl von Anschlußstiften führt außerdem zu einer geringeren Kontaktfläche mit der wiederum eine einfachere Gehäusewahl für Basisband- und Hochfrequenzteil und somit eine kostengünstigere Systemlösung für die Sende- und Empfangsanordnung möglich ist.

Das Dokument DE 19 918 059 schlägt eine Lösung vor, um die Anzahl von Leitungen zwischen dem Basisband- und Hochfrequenzteil zu verringern, indem jede Leitung bidirektional ist.

Aufgabe der vorliegenden Erfindung ist es, eine geringe Anzahl an Anschlußstiften an den Halbleiterchips zu ermöglichen.

Gelöst wird die Aufgabe ausgehend von den Merkmalen des Oberbegriffes durch die kennzeichnenden Merkmale des Patenanspruches 1 beziehungsweise des Patenanspruches 4.

Die Daten, die von dem Basisbandchip an den Hochfrequenzchip übertragen werden, können in zwei Klassen gegliedert werden. Ein Teil der zu sendenden Daten sind Nutzdaten, welche die zu übertragenden Informationen im drahtlosen Kommunikationssystem enthalten. Ein weiterer Teil sind Kontroll- oder Befehlsdaten zwischen den beiden Halbleiterchips, beispielsweise, um die Taktsignale auf den beiden Halbleiterchips zu synchronisieren, die Sendeleistung, die Sendefrequenz, die Sendeamplitude, das Ein- und Ausschalteverhalten des Senders und Empfängers, etc., zu regeln oder zu steuern.

Die Daten werden üblicherweise als Datenstrom übertragen. Das bedeutet, dass eine Übertragung der Daten in einem genau definierten Takt zu erfolgen hat, welcher in der Regel der Symbolrate des Funkkanals im drahtlosen Kommunikationssystem oder einem ganzzahligen Vielfachen von diesem entspricht.

Vorteilhafte Weiterbildungen der Erfindung sind in den Unteransprüchen angegeben.

Weist die Sende- und Empfangsanordnung mindestens einen Kanal der kanalorientierten Verbindung auf, über den Kontroll- und/oder Nutzdaten übertragbar sind, oder ist der mindestens eine Kanal der kanalorientierte Verbindung entweder für eine unidirektionale oder eine bidirektionale Datenübertragung der Kontroll- und/oder Nutzdaten ausgelegt, kann dadurch die Anzahl der physikalischen Leitungen zwischen der Basisband verarbeitenden und der Hochfrequenz verarbeitenden Einrichtung auf ein Minimum reduziert werden. In einer extremen Lösung ist nur eine einzelne physikalische Leitung zwischen den beiden Halbleiterchips erforderlich, die einen bidirektionalen Kanal zur Übertragung von Nutz- und Kontrolldaten zur Verfügung stellt.

Weist die Sende- und Empfangsanordnung mindestens einem Pufferspeicher zwischen der kanalorientierten Verbindung und der Basisband verarbeitenden Einrichtung oder der Hochfrequenz verarbeitenden Einrichtung für eine Speicherung von sequentiell übertragenden Daten auf, ermöglicht ein solcher Pufferspeicher eine Datenübertragung zwischen den beiden Halbleiterchips mit fester mittlerer Datenrate, wie es beispielsweise bei einer fixierten Symbolrate in Senderichtung erforderlich sein kann. Kurzfristige Abweichungen können abgefangen werden, indem die übertragenen Daten in dem Pufferspeicher auf der Empfangsseite der kanalorientierten Verbindung zwischengespeichert werden.

Weist die kanalorientierte Verbindung einen weiteren Kanal auf, über den ein in der Hochfrequenz verarbeitenden Einrichtung erzeugtes Taktsignal an die Basisband verarbeitende Einrichtung übertragbar ist, wird eine Synchronisierung der Taktsignale in der Hochfrequenz verarbeitenden Einrichtung und in der Basisband verarbeitenden Einrichtung möglich.

In einer Ausführungsform, bei der ein Takt für mindestens einen Kanal der kanalorientierten Verbindung durch das in der Hochfrequenz verarbeitenden Einrichtung erzeugte Taktsignal ableitbar ist, kann auf eine seperate Taktleitung für die Datenübertragung über einen Kanal verzichtet werden.

Ist ein Systemtakt der Basisband verarbeitenden Einrichtung durch ein in der Hochfrequenz verarbeitenden Einrichtung erzeugtes Taktsignal ableitbar, kann dadurch auf einen Oszillator in der Basisband verarbeitenden Einrichtung verzichtet werden, wodurch sich die Silizumfläche des Halbleiterchips verkleinern läßt. Vorteilhaft ist ebenfalls, dass dadurch der Energieverbrauch der Basisband verarbeitenden Einrichtung verringert werden kann.

Durch die Kennzeichnung des Paketes mittels einer Paketindikatorinformation, wie beispielsweise einem einzelnen Bit, kann über einen Kanal der kanalorientierten Verbindung sowohl Nutz- als auch Kontrolldaten übertragen werden.

Empfängt die Basisband verarbeitende Einrichtung ein reduziertes Taktsignal, bei dem nur jeder n-te Taktimpuls des in der Hochfrequenz verarbeitenden Einrichtung erzeugten Taktsignals an die Basisband verarbeitende Einrichtung gesendet wird, so wird die Basisband verarbeitende Einrichtung in einen Modus versetzt, in dem weniger Leistung benötigt wird (low power mode). Üblicherweise wird in einem solchen Modus die Sende- und Empfangsseite der Hochfrequenz verarbeitenden Einrichtung nicht benutzt. Durch die Übertragung des reduzierten Taktsignals wird ein Referenztakt für die Basisband verarbeitende Einrichtung bereitgestellt.

Die Erfindung wird nachfolgend an mehreren Ausführungsbeispielen anhand der Zeichnungen näher erläutert.

Dabei zeigen
- Fig. 1: ein vereinfachtes Blockschaltbild mit einer über drei Kanäle verbundenen Sende- und Empfangsanordnung,
- Fig.2: einen beispielhaften Aufbau eines Datenpakets und
- Fig.3: einen beispielhaften Signalverlauf der kanalorientierten Verbindung bei der Übertragung eines reduzierten Taktsignals.

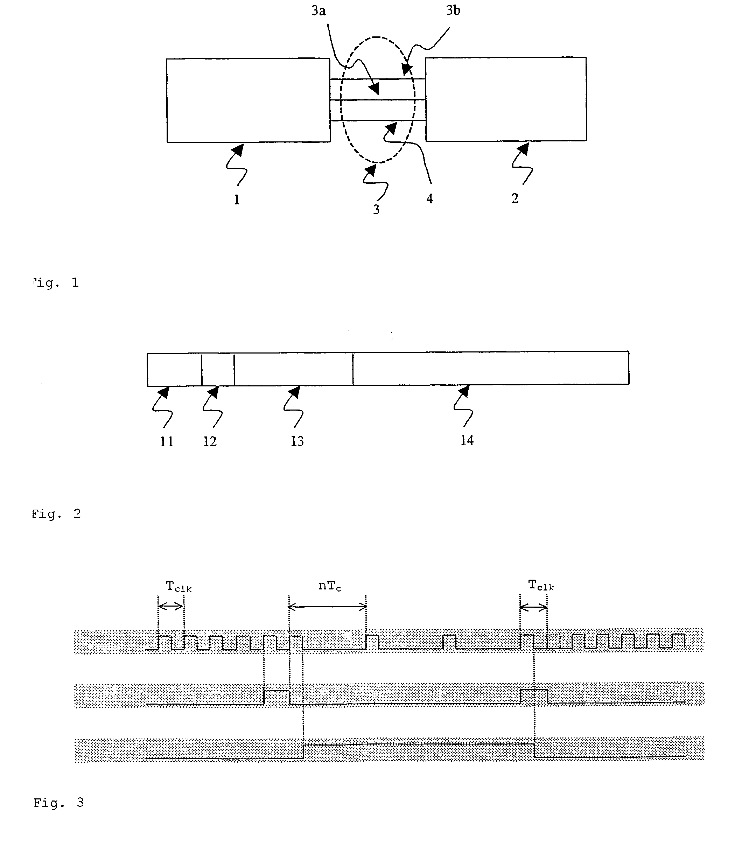

In Fig. 1 ist eine Sende- und Empfangsanordnung für ein drahtloses Kommunikationssystem mit einer Basisband verarbeitenden Einrichtung (1) und einer Hochfrequenz verarbeitenden Einrichtung (2) schematisch dargestellt. Beide Einrichtungen sind über eine kanalorientierte Verbindung (3) miteinander verbunden. Diese kanalorientierte Verbindung (3) dient zur Übertragung von Nutz- und Kontrolldaten zwischen der Basisband verarbeitenden Einrichtung (1) und der Hochfrequenz verarbeitenden Einrichtung (2), sowie umgekehrt. Die kanalorientierte Verbindung (3) umfaßt dabei mehrere Kanäle (3a, 3b, 4), die zur Übertragung von Kontroll- und/oder Nutzdaten ausgelegt sind. Bevorzugterweise werden die Daten als Datenpakete übertragen, wobei die Übertragung in uni- oder bidirektionaler Richtung erfolgen kann. Eine bidirektionale Übertragung von Daten kann beispielsweise in einem Halbduplexverfahren erfolgen.

In einer bevorzugten Ausführungsform entspricht jeder Kanal einer physikalischen Leitung zwischen der Basisband verarbeitenden Einrichtung (1) und der Hochfrequenz verarbeitenden Einrichtung (2). In einer anderen Ausführungsform umfaßt mindestens ein Kanal eine Anzahl von physikalischen Leitungen, so dass eine sequentielle Übertragung von Datensymbolen, die aus mehreren Bits bestehen, oder eine serielle Übertragung von Daten ermöglicht wird.

Bevorzugterweise erfolgt die Übertragung von Daten mit einem Takt, der unabhängig von der Symbolrate im Kommunikationssystem ist. Sowohl Nutz- als auch Kontrolldaten werden als Datenpakete übertragen. In einer bevorzugten Ausführungsform weist die erfindungsgemäße Sende- und Empfangsanordnung ein Kanal (3a) auf, über den Kontroll- und Nutzdaten von der Basisband verarbeitenden Einrichtung (1) an die Hochfrequenz verarbeitenden Einrichtung (2) übertragen werden. Über einen weiteren Kanal (3b) werden Kontroll- und Nutzdaten von der Hochfrequenz verarbeitenden Einrichtung (2) an die Basisband verarbeitenden Einrichtung (1) übertragen. Ein dritter Kanal (4) dient dazu, ein Taktsignal an die Basisband verarbeitende Einrichtung (1) zu übertragen, das in der Hochfrequenz verarbeitenden Einrichtung (2) erzeugt wird. Dieses Taktsignal läuft kontinuierlich.

Bevorzugterweise wird in der Basisband verarbeitenden Einrichtung (1) ein Systemtakt aus dem Taktsignal generiert. Weiterhin ist es möglich, als Übertragungstakt für die Datenpakete das von der Hochfrequenz verarbeitenden Einrichtung (2) an die Basisband verarbeitende Einrichtung (1) übertragene Taktsignale zu verwenden.

In Fig. 2 ist ein beispielhafter Aufbau eines Datenpakets symbolisch dargestellt, in dessen Form Kontroll- und Nutzdaten übertragen werden. Jedes Paket beginnt mit einem Startbit (11). Anhand des Startbits kann der Empfänger (die Basisband verarbeitende Einrichtung (1) oder die Hochfrequenz verarbeitende Einrichtung (2)), den Beginn eines Datenpaketes feststellen. Das Startbit kann ebenfalls dazu genutzt werden, um einen optimalen Abtastzeitpunkt zu bestimmen (clock recovery). Diese Bestimmung ist erforderlich, sobald keine ausreichende Synchronität zwischen dem Datensignal und dem Übertragungstakt besteht. Es ist ebenso möglich, dass statt des Startbits (11) eine Synchronisierungssequenz (11), die aus einer festen Sequenz von Bits besteht, übertragen wird

Unmittelbar nach dem Startbit (11) folgt ein Paketindikator (12), welcher anzeigt, ob im folgenden Kontroll- oder Nutzdaten übertragen werden. Die Unterscheidung erfolgt anhand eines Bits, es ist aber auch denkbar, das ein Symbol, dass aus mehreren Bits besteht, dazu verwendet wird. Die erlaubt eine effiziente Weiterleitung des Datenpakets in der Basisband oder in der Hochfrequenz verarbeitenden Einrichtung (1) bzw. (2).

Im folgenden wird zwischen Kontroll- und Nutzdatenpaketen unterschieden.

In einem Kontrolldatenpaket folgt auf den Paketindikator (12) eine Registeradresse (13), an welche die Kontrolldaten gerichtet sind. Damit ist ein registerorientierte Datenübertragung zwischen der Basisband oder in der Hochfrequenz verarbeitenden Einrichtung (1) bzw. (2) und umgekehrt möglich. Auf die Registeradresse (13) folgt ein Datensegment (14), das beispielsweise einen Befehl oder eine Statusinformation enthalten kann.

In einem Nutzdatenpaket folgt auf den Paketindikator (12) eine Längenangabe (13), welche die Länge des folgenden Datensegments (14) angibt. Das Datensegment (14) enthält die zu übertragenden Nutzdaten. Die variable Länge ermöglicht entweder eine hohe Nettobitrate bei großer Länge des Datensegments, oder eine höhere Latenzzeit bei kleiner Länge des Datensegments. Letzteres kann insbesondere bei der Übertragung von Sprachdaten erforderlich sein.

Die Übertragung der Kontroll- und Nutzdaten in Form von Datenpaketen ermöglicht eine Reihe von Übertragungsweisen.

Viele Aktionen der Basisband verarbeitenden Einrichtung (1) und der Hochfrequenz verarbeitenden Einrichtung (2) sind an bestimmte Zeitpunkte gebunden. Ein Beispiel ist der Startzeitpunkt eines Transmit Pakets im Protokoll des drahtlosen Kommunikationssystems. Dieser Startzeitpunkt wird durch die Basisband verarbeitende Einrichtung (1) festgelegt und wird dann an die Hochfrequenz verarbeitende Einrichtung (2) übertragen.

Eine Alternative, den Startzeitpunkt für ein Transmit Paket zu übertragen, besteht darin, ein Kontroll- oder Nutzdatenpaket zu einem genau bestimmten Zeitpunkten zu übertragen. Dazu wird das Kontroll- oder Nutzdatenpaket im Symbolzeitraster des drahtlosen Kommunikationssystem genau positioniert. Neben seinem Inhalt enthält ein solches Kontroll- oder Nutzdatenpaket somit eine zusätzliche Zeitinformation.

Eine weitere Alternative besteht darin, die Paketlänge und die Pakethäufigkeit von Kontroll- oder Nutzdatenpaketen derart einzustellen, dass die mittlere Datenübertragungsrate über die kanalorientierte Verbindung (3) im wesentlichen der Symbolrate des drahtlosen Kommunikationssystems entspricht. Kurzzeitige Abweichungen können in einem Pufferspeicher, oder FiFo (First-in First-out) Speicher auf der Empfangsseite der kanalorientierten Verbindung (3) abgefangen werden.
Dazu kann vorgesehen sein, dass der Abstand der Datenpakete fest eingestellt wird, oder dass Datenpakete mit einer eingestellten Periodizität gesendet werden.

Eine andere Alternative besteht darin, dass die Hochfrequenz verarbeitende Einrichtung (2) jedes Datenpaket einzeln anfordert. Eine solche Anforderung erfolgt dann, wenn beispielsweise der Pufferspeicher auf der Empfangsseite der Hochfrequenz verarbeitenden Einrichtung (2), nachgefüllt werden kann. Eine solche Anforderung eines Datenpaketes erfolgt immer derart, dass der Pufferspeicher nicht leerläuft. Um dies zu ermöglichen, kann die Hochfrequenz verarbeitende Einrichtung (2) einen Zustrom von Kontroll- oder Nutzdatenpaketen über die kanalorientierte Verbindung (3) zulassen, wenn der Pufferspeicher einen gewissen Füllstand unterschreitet, und Zustrom von Kontroll- oder Nutzdatenpaketen unterbinden, wenn der Pufferspeicher einen gewissen Füllstand überschreitet. Sind keine Daten im Pufferspeicher gespeichert, so wurden für einen längeren Zeitraum keine Daten von der Basisband verarbeitenden Einrichtung (1) and die Hochfrequenz verarbeitende Einrichtung (2) gesendet. Es ist daher denkbar, dass ein Leerlaufen des Pufferspeichers als Startzeitpunkt für ein Ereignis zu wählen, wie beispielsweise das Umschalten in einen Energiesparmodus.

In Fig. 3 ist ein beispielhafter Signalverlauf der kanalorientierten Verbindung (3) bei der Übertragung eines reduzierten Taktsignals abgebildet. Dargestellt sind drei Kanäle (CLK, CLKREQ, CLKSEL) der kanalorientierten Verbindung (3). Über den Kanal (CLK) wird ein Taktsignal in Form einer Folge von Taktimpulsen, deren aufsteigende Flanke um ein Zeitintervall T_{clk} beabstandet sind, übertragen. Um die Übertragung eines reduzierten Taktsignals zu initiieren, sendet die Basisband verarbeitende Einrichtung (1) einen Puls auf dem Kanal (CLKREQ) dessen steigende Flanke mit der steigenden Flanke eines Pulses des Taktsignals auf dem Kanal (CLK) zusammenfällt. Die Hochfrequenz verarbeitende Einrichtung (2) überträgt daraufhin nur noch jeden n-ten Impuls über den Kanal (CLK). Dadurch erhält die Basisband verarbeitende Einrichtung (1) ein reduziertes Taktsignal, in Form von Pulsen, deren aufsteigenden Flanken um das Zeitintervall nT_{clk} beabstandet sind. Diese Übertragung des reduzierten Taktsignals wird beispielsweise dadurch möglich, dass die Pulse des Taktsignals, die zwischen zwei um das Zeitintervall nT_{clK} beabstandeten Pulsen liegen, ausgeblendet werden. Die Hochfrequenz verarbeitenden Einrichtung (2) beantwortet gleichzeitig den Puls auf dem Kanal (CLKREQ) mit einem Pegelwechsel auf dem Kanal (CLKSEL). Dabei fallen die ansteigende Flanke des Pegels auf dem Kanal (CLKSEL) mit der fallenden Flanke des Pulses des Taktsignals auf dem Kanal (CLK) zusammen. Der neue Pegel signalisiert der Basisband verarbeitenden Einrichtung (1), dass über den Kanal (CLK) ein reduziertes Taktsignal übertragen wird.

Durch einen erneuten Puls auf dem Kanal (CLKREQ) beendet die Basisband verarbeitende Einrichtung (1) die Übertragung des reduzierten Taktsignals. Mit der fallenden Flanke des Pulses auf dem Kanal (CLKREQ) wird die Ausblendung der Pulse des Taktsignals ausgesetzt. Gleichzeitig wird der Pegel auf dem Kanal (CLKSEL) auf den ursprünglichen Wert zurückgesetzt, um der Basisband verarbeitenden Einrichtung (1) anzuzeigen, dass das ursprüngliche Taktsignal gesendet wird.

Ebenfalls ist denkbar, dass die Hochfrequenz verarbeitende Einrichtung (2) von sich aus die Übertragung des reduzierten Taktsignals beendet.

Bevorzugterweise kann die Basisband verarbeitende Einrichtung (1) zwischen einem Paketmodus, in dem über die kanalorientierte Verbindung (3) Kontroll- oder Nutzdatenpakete übertragen werden, und einen Signalmodus umschalten, in welchem eine Übertragung von Kontroll- oder Nutzdatenpaketen nicht möglich ist, und in dem das reduzierte Taktsignal übertragen wird. Der Übergang vom Paketmodus zum Signalmodus kann durch die Übertragung eines speziellen Kontrolldatenpakets im Paketmodus erfolgen. Ein andere Möglichkeit ist ein Übergang in den Signalmodus, sobald wenigstens ein Pufferspeicher auf den Empfangsseiten der kanalorientierten Verbindung (3) keine Daten enthält.

Der Übergang vom Signalmodus in den Paketmodus erfolgt, sobald die Übertragung des reduzierten Taktsignals beendet wurde, und das ursprüngliche Taktsignal über den Kanal (CLK) übertragen wird.

## Patentansprüche

1. Sende- und Empfangsanordnung für ein drahtloses Kommunikationssystem, mit
- einer auf einem ersten Halbleiterchip integrierten Basisband verarbeitenden Einrichtung (1) zur Verarbeitung von digitalen Signalen in ein Basisbandsignal und umgekehrt und
- einer auf einem zweiten Halbleiterchip integrierten Hochfrequenz verarbeitenden Einrichtung (2) zum Umsetzen des Basisbandsignals in ein Hochfrequenzsignal und umgekehrt,
- mindestens einem Kanal (3a, 3b), der eine Verbindung (3) zwischen der Basisband verarbeitenden Einrichtung (1) und der Hochfrequenz verarbeitenden Einrichtung (2) ermöglicht.
wobei der mindestens eine Kanal (3a, 3b) für eine sequentielle Datenübertragung eine oder mehrere physikalische Leitungen zwischen der Basisband verarbeitenden Einrichtung (1) und der Hochfrequenz verarbeitenden Einrichtung (2) zur bitweisen beziehungsweise symbolweisen Datenübertragung umfasst
**gekennzeichnet dadurch, dass** die Basisband verarbeitende Einrichtung (1), die Hochfrequenz verarbeitende Einrichtung (2), und der Kanal derart ausgebildet sind, dass:
- sowohl Kontrolldaten zwischen den beiden Halbleiterchips
- als auch Nutzdaten des Kommunikationssystems in Form von Datenpaketen übertragbar sind.

2. Sende- und Empfangsanordnung gemäß einem der vorangehenden Ansprüche, **gekennzeichnet durch** mindestens einen Pufferspeicher zwischen der Verbindung (3) und der Basisband verarbeitenden Einrichtung (1) oder der Hochfrequenz verarbeitenden Einrichtung (2), für eine Speicherung von sequentiell übertragenen Daten.

3. Sende- und Empfangsanordnung gemäß einem der vorangehenden Ansprüche, wobei die Verbindung (3) einen weiteren Kanal (4) aufweist, über den ein in der Hochfrequenz verarbeitenden Einrichtung (2) erzeugtes Taktsignal an die Basisband verarbeitende Einrichtung (1) übertragbar ist.

4. Verfahren zum Übertragen von Kontroll- und Nutzdaten in einer Sende- und Empfangsanordnung für ein drahtloses Kommunikationssystem mit
- einer auf einem ersten Halbleiterchip integrierten Basisband verarbeitenden Einrichtung (1) zur Verarbeitung von digitalen Signalen in ein Basisbandsignal und umgekehrt und
- einer auf einem zweiten Halbleiterchip integrierten Hochfrequenz verarbeitenden Einrichtung (2) zum Umsetzen des Basisbandsignals in ein Hochfrequenzsignal und umgekehrt,
wobei über mindestens einen Kanal (3a, 3b) einer Verbindung (3) zwischen der Basisband verarbeitenden Einrichtung (1) und der Hochfrequenz verarbeitenden Einrichtung (2)
- sowohl Kontrolldaten zwischen den beiden Halbleiterchips
- als auch Nutzdaten des Kommunikationssystems in Form von Datenpaketen übertragen werden,
wobei der mindestens eine Kanal (3a, 3b) eine oder mehrere physikalische Leitungen zwischen der Basisband verarbeitenden Einrichtung (1) und der Hochfrequenz verarbeitenden Einrichtung (2) zur bitweisen beziehungsweise symbolweisen Datenübertragung umfasst.

5. Verfahren gemäß Anspruch 4, **dadurch gekennzeichnet, dass** ein Datenpaket jeweils einen ersten Teil und einen zweiten Teil aufweist und der Beginn des ersten Teils ein Startbit (11), das dem Basisbandteil (1) oder dem Hochfrequenzteil (2) den Beginn eines Datenpaketes anzeigt, und eine Paketindikatorinformation (12) aufweist, die anzeigt, ob mit dem Datenpaket Kontroll- oder Nutzdaten übertragen werden.

6. Verfahren gemäß Anspruch 5, **dadurch gekennzeichnet, dass** über einen weiteren Kanal (4) der Verbindung (3) ein in der Hochfrequenz verarbeitenden Einrichtung (2) erzeugtes periodisches Taktsignal, gebildet durch ein Folge von Taktimpulsen, an die Basisband verarbeitende Einrichtung (1) übertragen wird.

7. Verfahren gemäß Anspruch 6, **dadurch gekennzeichnet, dass** ein Takt für mindestens einen Kanal (3a, 3b) der Verbindung (3) und/oder ein Systemtakt in der Basisband verarbeitenden Einrichtung (1) durch das an die Basisband verarbeitende Einrichtung (1) übertragene Taktsignal (CLK) vorgegeben wird.

8. Verfahren gemäß einem der Ansprüche 6 oder 7, wobei an die Basisband verarbeitende Einrichtung (1) ein reduziertes Taktsignal (CLK) übertragen wird, bei dem nur jeder n-te Taktimpuls des in der Hochfrequenz verarbeitenden Einrichtung (2) erzeugten Taktsignals an die Basisband verarbeitende Einrichtung (1) übertragen wird.

9. Verfahren gemäß Anspruch 8, wobei der Basisband verarbeitenden Einrichtung (1) angezeigt wird, ob ein reduziertes Taktsignal (CLK) an die Basisband verarbeitende Einrichtung (1) übertragen wird, indem über mindestens einen Kanal (3b) der Verbindung (3) ein Statusindikator (CLKSEL) von der Hochfrequenz übertragenden Einrichtung (2) an die Basisband übertragende Einrichtung (1) bereitgestellt wird.

## Claims

1. Transmitting and receiving arrangement for a wirefree communications system, having
- a device (1) which processes baseband and is integrated on a first semiconductor chip for processing digital signals to form a baseband signal, and vice versa, and
- a device (2) which processes radio frequency and is integrated on a second semiconductor chip for conversion of the baseband signal to a radio-frequency signal, and vice versa,
- at least one channel (3a, 3b) which allows a link (3) between the device (1) which processes baseband and the device (2) which processes radio-frequency,
wherein the at least one channel (3a, 3b) comprises one or more physical lines for sequential data transmission between the device (1) which processes baseband and the device (2) which processes radio frequency, for bit-by-bit or symbol-by-symbol data transmission, **characterized in that** the device (1) which processes baseband, the device (2) which processes radio frequency,and the channel are designed such that
- not only can monitoring data be transmitted between the two semiconductor chips
- but payload data for the communications system can also be transmitted in the form of data packets.

2. Transmitting and receiving arrangement according to one of the preceding claims, **characterized by** at least one buffer store between the link (3) and the device (1) which processes baseband, or the device (2) which processes radio frequency, for storage of sequentially transmitted data.

3. Transmitting and receiving arrangement asclaimed in one of the preceding claims, with the link (3) having a further channel (4) via which a clock signal, which is produced in the device (2) which processes radio frequency, can be transmitted to the device (1) which processes baseband.

4. Method for transmission of monitoring and payload data in a transmitting and receiving arrangement for a wirefree communications system, having
- a device (1) which processes baseband and is integrated on a first semiconductor chip for processing digital signals to form a baseband signal, and vice versa, and
- a device (2) which processes radio frequency and is integrated on a second semiconductor chip for conversion of the baseband signal to a radio frequency signal, and vice versa,
wherein, via at least one channel (3a, 3b) of a link (3) between the device (1) which processes baseband and the device (2) which processes radio-frequency,
- not only can monitoring data be transmitted between the two semiconductor chips
- but payload data for the communications system can also be transmitted
in the form of data packets,
wherein the at least one channel (3a, 3b) comprises one or more physical lines between the device (1) which processes baseband and the device (2) which processes radio frequency, for bit-by-bit or symbol-by-symbol data transmission.

5. Method according to Claim 4, **characterized in that** a data packet in each case has a first part and a second part, and the start of the first part has a start bit (11), which indicates the start of a data packet to the baseband part (1) or to the radio-frequency part (2), and packet indicator information (12), which indicates whether the data packet is being used to transmit monitoring or payload data.

6. Method according to Claim 5, **characterized in that** a periodic clock signal which is produced in the device (2) which processes radio frequency, formed by a sequence of clock pulses, is transmitted via a further channel (4) of the link (3) to the device (1) which processes baseband.

7. Method according to Claim 6, **characterized in that** a clock for at least one channel (3a, 3b) of the link (3), and/or a system clock in the device (1) which processes baseband is predetermined by the clock signal (CLK) which is transmitted to the device (1) which processes baseband.

8. Method according to one of Claims 6 or 7, with a reduced clock signal (CLK) being transmitted to the device (1) which processes baseband, in which only every n-th clock pulse of the clock signal which is produced in the device (2) which processes radio frequency is transmitted to the device (1) which processes baseband.

9. Method according to Claim 8, with the device (1) which processes baseband being provided with an indication as to whether a reduced clock signal (CLK) is being transmitted to the device (1) which processes baseband, in that a status indicator (CLKSEL) is provided from the device (2) which transmits radio frequency to the device (1) which transmits baseband via at least one channel (3b) of the link (3).

## Revendications

1. Dispositif d'émission et de réception pour un système de communication sans fil, comprenant
- un dispositif (1) de traitement en bande de base intégré sur une première puce à semi-conducteur pour transformer des signaux numériques en un signal de bande de base et inversement et
- un dispositif (2) de traitement en haute fréquence intégré sur une deuxième puce à semi-conducteur pour transformer le signal en bande de base en un signal en haute fréquence et inversement,
- au moins un canal (3a, 3b) qui permet d'avoir une liaison (3) entre le dispositif (1) de traitement en bande de base et le dispositif (2) de traitement en haute fréquence,
le au moins un canal (3a, 3b) comprenant, pour une transmission séquentielle de données, une ou plusieurs lignes physiques entre le dispositif (1) de traitement en bande de base et le dispositif (2) de traitement en haute fréquence pour la transmission de données bit par bit ou symbole par symbole,
**caractérisé en ce que** le dispositif (1) de traitement en bande de base, le dispositif (2) de traitement en haute fréquence et le canal sont constitués de façon à ce que :
- tant des données de contrôle entre les deux puces à semi-conducteur
- qu'également des données utiles du système de communication peuvent être transmises sous la forme de paquets de données.

2. Dispositif d'émission et de réception suivant l'une des revendications précédentes, **caractérisé par** au moins une mémoire tampon entre la liaison (3) et le dispositif (1) de traitement en bande de base ou le dispositif (2) de traitement en haute fréquence pour une mise en mémoire de données transmises de façon séquentielle.

3. Dispositif d'émission et de réception suivant l'une des revendications précédentes, dans lequel la liaison (3) comporte un autre canal (4) par lequel un signal d'horloge produit dans le dispositif (2) de traitement en haute fréquence peut être transmis au dispositif (1) de traitement en bande de base.

4. Procédé de transmission et de données de contrôle et de données utiles dans un dispositif d'émission et de réception pour un système de communication sans fil, comprenant
- un dispositif (1) de traitement en bande de base intégré sur une première puce à semi-conducteur pour transformer des signaux numériques en un signal de bande de base et inversement et
- un dispositif (2) de traitement en haute fréquence intégré sur une deuxième puce à semi-conducteur pour transformer le signal en bande de base en un signal en haute fréquence et inversement,
dans lequel il est transmis sous forme de paquets de données par au moins un canal (3a, 3b) de liaison (3) entre le dispositif (1) de traitement en bande de base et le dispositif (2) de traitement en haute fréquence,
- tant des données de contrôle entre les deux puces à semi-conducteur,
- qu'également des données utiles du système de communication,
le au moins un canal (3a, 3b) comprenant une ou plusieurs lignes physiques entre le dispositif (1) de traitement en bande de base et le dispositif (2) de traitement en haute fréquence pour la transmission de données bit par bit ou symbole par symbole.

5. Procédé suivant la revendication 4, **caractérisé en ce qu'**un paquet de données en respectivement une première partie et une deuxième partie et le début de la première partie a un bit (11) de début qui indique à la partie (1) de bande de base ou à la partie (2) de haute fréquence le début d'un paquet de données et une information (12) d'indicateur de paquet qui indique s'il est transmis par le paquet de données des données de contrôle ou des données utiles.

6. Procédé suivant la revendication 5, **caractérisé en ce qu'**il est transmis au dispositif (1) de traitement en bande de base par un autre canal (4) de la liaison (3) un signal de cadence périodique qui est produit dans le dispositif (2) de traitement en haute fréquence et qui est formé d'un train d'impulsions d'horloge.

7. Procédé suivant la revendication 6, **caractérisé en ce qu'**il est prescrit une cadence pour au moins un canal (3a, 3b) de la liaison (3) et/ou une cadence de système dans le dispositif (1) de traitement de bande de base par le signal (CLK) d'horloge transmis au dispositif (1) de traitement de bande de base.

8. Procédé suivant l'une des revendications 6 ou 7, dans lequel il est transmis au dispositif (1) de traitement de bande de base un signal (CLK) d'horloge réduit, dans lequel seulement une impulsion d'horloge sur n du signal d'horloge produit dans le dispositif (2) de traitement de haute fréquence est transmise au dispositif (1) de traitement de bande de base.

9. Procédé suivant la revendication 8, dans lequel il est indiqué au dispositif (1) de traitement de bande de base si un signal (CLK) d'horloge réduit est transmis au dispositif (1) de traitement de bande de base en mettant à disposition sur le dispositif (1) de transmission de bande de base par au moins un canal (3b) de la liaison (3) un indicateur (CLKSEL) d'état du dispositif (2) de transmission en haute fréquence.
